# EUROPÄISCHE PATENTANMELDUNG

(11) **EP 4 840 610 A2**
(43) Veröffentlichungstag der Anmeldung: **18.11.2026**
(21) Anmeldenummer: 26177220.6
(22) Anmeldetag: 07.05.2026
(51) Int. Cl.: B29C 45/14, B65D 1/40, B65D 25/36, B29L 31/00

(54) **LABELFORMTEIL UND VERFAHREN ZU DESSEN HERSTELLUNG**

(30) Priorität: 16.05.2025 DE 102025119136
(71) Anmelder: säntis packaging ag, 9464 Rüthi (CH)
(72) Erfinder: AMREIN, Peter, 6204 Sempach (CH)
(74) Vertreter: patcare Patentanwälte Partnerschaft mbB

(57) **Zusammenfassung**

Die Erfindung betrifft ein Labelformteil (10) umfassend ein Formteil (12) und ein mit dem Formteil (12) thermisch verschmolzenes Folienteil (14), dadurch gekennzeichnet, dass das Formteil (12) mindestens eine von einem Fensterrahmen (16) umlaufend begrenzte fensterartige Öffnung (18) umfasst, wobei das Folienteil (14) die fensterartige Öffnung (18) abdeckt und umlaufend um den Fensterrahmen (16) fest mit dem Fensterrahmen (16) verbunden ist. Ferner betrifft die Erfindung die Verwendung eines solchen Labelformteils (10) als ein Deckel oder ein Behälter. Weiterhin betrifft die Erfindung auch ein Verfahren (100) zum Herstellen eines solchen Labelformteils (10).

## Beschreibung

Die vorliegende Erfindung betrifft ein Labelformteil und ein Verfahren zu dessen Herstellung.

Für unsere moderne arbeitsteilige und weltweit miteinander vernetzte Gesellschaft ist der Handel von physischen Gütern eines der zentralen und wesentlichen Elemente. Die gehandelten Güter müssen dabei zwischen den verschiedenen Parteien möglichst sicher, zuverlässig und ressourcenschonend transportiert werden können. Um dies zu erlauben, wird häufig auf Verpackungen zurückgegriffen, welche die Güter schützen sollen, insbesondere während ihres Transports und/oder bis sie verbraucht sind. Die Art der Verpackung kann dabei in Abhängigkeit an die erwünschten Eigenschaften aus einer breiten Palette von bereits bekannten Möglichkeiten ausgewählt werden. Aufgrund der enormen Anzahl an weltweit benötigten Verpackungen besteht dennoch weiterhin ein großer Bedarf, die Eigenschaften der verwendeten Verpackungen weiter zu optimieren.

Beispielsweise kann eine Verpackung, die im Wesentlichen nur als Transportschutz dient, nach dem Transport entsorgt werden, so dass eine optimale Verpackung möglichst wenig beziehungsweise weniger Verpackungsmaterial umfasst, ohne den Schutz der verpackten Güter zu beeinträchtigen.

Der vorliegenden Erfindung liegt daher die Aufgabe zugrunde, zumindest eine bekannte Verpackungsart zu optimieren.

Diese Aufgabe wird mit Hilfe der verschiedenen Gegenstände der unabhängigen Ansprüche gelöst.

Beschrieben wird ein Labelformteil umfassend ein Formteil und ein mit dem Formteil thermisch verschmolzenes Folienteil, dadurch gekennzeichnet, dass das Formteil mindestens eine von einem Fensterrahmen umlaufend begrenzte fensterartige Öffnung umfasst, wobei das Folienteil die fensterartige Öffnung abdeckt und umlaufend um den Fensterrahmen fest mit dem Fensterrahmen verbunden ist. Das Labelformteil ist dabei üblicherweise zur Aufnahme eines zu verpackenden beziehungsweise zu transportierenden Gutes vorgesehen. Zu diesem Zweck weist das Formteil dabei üblicherweise neben der fensterartigen Öffnung, die insbesondere während der Herstellung des Labelformteils und vor der Aufnahme des Gutes von dem Folienteil bedeckt und verschlossen ist, noch eine weitere Öffnung auf, durch die insbesondere ein Befüllen oder Entleeren des Labelformteils möglich ist. Diese weitere Öffnung wird im Folgenden allgemein und zur Abgrenzung als "Befüllöffnung" bezeichnet. Das Formteil wird beispielsweise mittels eines dem Fachmann bekannten Verfahrens unter Verwendung eines Formwerkzeugs und thermischer Energie geformt. Bei diesem Formprozess wird das Formteil vorzugsweise bereits mittels des Formwerkzeugs mit der mindestens einen fensterartigen Öffnung ausgebildet. Das verwendete Folienteil kann transparent oder undurchsichtig sein. Durch das Vorsehen der von dem Folienteil verschlossenen fensterartigen Öffnung kann das Gewicht des Labelformteils bei im Wesentlichen gleicher Funktionalität reduziert werden. Es wird also weniger Material zur Herstellung des Formteils benötigt (im Vergleich zu einem Formteil ohne fensterartige Öffnung). Da ferner eine Wandstärke des Formteils üblicherweise größer ausfällt als eine Wandstärke eines Folienteils, die Wand eines Formteils also in der Regel dicker ist als die Wandstärke eines Folienteils, ist auch das Gewicht des Labelformteils insgesamt reduziert im Vergleich zu einem herkömmlichen Labelformteil ohne fensterartige Öffnung im Formteil. Dies führt zu einem reduzierten Materialbedarf für das Formteil und, ein im Wesentlichen identisches spezifisches Gewicht von Folienteil und Formteil unterstellt, zu einem geringeren zu transportierenden Gewicht. Beides schont die verfügbaren Ressourcen und spart Kosten. Das Folienteil kann eine Dicke zwischen 20 und 250 my (µ) haben, wobei 1 my einer Foliendicke von 0,001 mm entspricht. Vorzugsweise kann das Folienteil eine Dicke zwischen 25 und 200 my haben, weiter bevorzugt eine Dicke zwischen 30 und 150 my. Besonders bevorzugt kann eine Dicke zwischen 30 und 40 my sein, insbesondere wenn das Folienteil PET (Polyethylenterephthalat) umfasst beziehungsweise aus diesem besteht. Weiter kann eine Dicke zwischen 35 und 95 my besonders bevorzugt sein, insbesondere wenn das Folienteil PP (Polypropylen) umfasst beziehungsweise aus diesem besteht. Ebenso kann eine Dicke zwischen 30 und 90 my besonders bevorzugt sein, insbesondere wenn das Folienteil OPS (Orientiertes Polystyrol) umfasst beziehungsweise aus diesem besteht. Die Nutzung anderer als der hier explizit genannten Materialien, insbesondere Kunststoffe, ist möglich, wobei insbesondere PE (Polyethylen) zu nennen ist. Wenn das Folienteil undurchsichtig ausgestaltet ist, so kann das Labelformteil äußerlich "unauffällig" wirken. Insbesondere kann das Folienteil optisch mit dem Formteil derart verschmelzen, dass von außen nicht erkennbar ist, ob das Labelformteil mit oder ohne Folienteil geformt wurde. Das Folienteil kann gegebenenfalls das Formteil an dessen Außenseite im Wesentlichen vollständig oder nur teilweise umgeben, insbesondere in den zu bedeckenden Bereichen der zumindest einen fensterartigen Öffnung. Es ist möglich, das Folienteil erst nach der Herstellung des Formteils an dem Formteil zu positionieren und dann thermisch mit dem Formteil fest zu verbinden, insbesondere umlaufend um den Fensterrahmen. Vorzugsweise wird das Folienteil jedoch bereits vor oder während der Herstellung des Formteils positioniert und dementsprechend bereits während der Herstellung des Formteils fest mit dem Formteil verbunden, insbesondere verbacken. Das Folienteil kann vorzugsweise insbesondere als ein einschichtiges Material, gegebenenfalls mit zusätzlicher Farbschicht in Form einer Bedruckung, ausgebildet sein. Dabei kann die Bedruckung explizit eine Schutzschicht, beispielsweise ein Schutzlack zur "Versiegelung" der Farbschicht (farbiger Aufdruck) beinhalten.

Vorteilhafte Ausgestaltungen ergeben sich aus den abhängigen Ansprüchen.

Vorzugsweise ist vorgesehen, dass das Formteil zumindest teilweise einen skelettartigen Körper aufweist. Als skelettartiger Körper wird insbesondere ein Körper bezeichnet, der als eine Gitterstruktur ausgebildet ist, wobei die Gitterstruktur ein Volumen definiert, wenn man eine Außenoberfläche zwischen den Elementen der Gitterstruktur annimmt. Vorliegend ist bei dem vollständigen Labelformteil diese Außenoberfläche im Wesentlichen durch das Folienteil ausgebildet, wobei die Gitterstruktur die fensterartige/n Öffnung/en vorgeben, sofern man von der Befüllöffnung absieht, die ja bei Formen des Labelformteils "offen" ist/bleibt. Die Gitterstruktur kann dabei durch unterschiedlich breite Stege ausgebildet sein. Die Lage und Breite der einzelnen Stege ist im Wesentlichen frei anpassbar, wobei lediglich auf eine ausreichende Formstabilität des Formteils zu achten ist. Auf diese Weise kann die zur Herstellung des Formteils erforderliche Materialmenge weiter reduziert werden, wodurch das Gesamtgewicht des Labelformteils insgesamt minimiert wird.

Nützlicherweise ist vorgesehen, dass das Formteil zumindest teilweise eine behälter- oder deckelartige Form aufweist. Eine behälter- oder deckelartige Ausgestaltung des Labelformteils ermöglicht in einfacher Weise die Verwendung des Labelformteils als Verpackung beziehungsweise Verpackungsteil.

Weiterhin kann vorgesehen sein, dass das Formteil zumindest teilweise aus einem Kunststoff ausgebildet ist. Kunststoff ist ein thermisch einfach formbarer Werkstoff mit weiteren Eigenschaften, die ihn zur Verwendung als Grundstoff für Verpackungen besonderes geeignet erscheinen lassen. Zu nennen ist beispielsweise die Möglichkeit zur Verpackung von Lebensmitteln usw.. Als Kunststoff kann beispielsweise Polypropylen (PP) zur Ausbildung des Formkörpers eingesetzt werden. Die Verwendung anderer, dem Fachmann bekannter Kunststoffe, beispielsweise aus der Familie der Polyester, insbesondere aus der Familie der Thermoplasten, beispielsweise Polyethylen (PE), Polyethylenterephthalat (PET) oder Polystyrol (PS), ist ebenfalls möglich. Der Formkörper kann insbesondere auch vollständig aus dem verwendeten Kunststoff ausgebildet werden. Für die Herstellung einer festen Verbindung zwischen dem Folienteil und dem Formteil kann dabei insbesondere auf die Verwendung zusätzlicher Klebemittel, beispielsweise in Form einer zusätzlichen Klebeschicht am Folienteil, verzichtet werden. Die Thermoplasten weisen im erhitzten/warmen Zustand eine ausreichende "Klebrigkeit" auf, um beim Abkühlen die gewünschte feste Verbindung zwischen dem Formteil und dem Folienteil herzustellen.

Ferner kann vorgesehen sein, dass das Formteil zumindest teilweise als ein Spritzgussteil ausgebildet ist. Spritzgussteile sind günstig und in effizienter Weise in hohen Stückzahlen zuverlässig und reproduzierbar herzustellen, weshalb das Spritzgießen als Verfahren, beispielsweise im Zusammenhang mit Kunststoff als Werkstoff oder einem anderen thermisch leicht formbaren Ausgangsstoff vorteilhaft ist. Wenn das Formteil als Spritzgussteil ausgebildet wird, wird der Werkstoff in seiner flüssigen Phase in ein entsprechend ausgebildetes Formwerkzeug eingespritzt. Das Formwerkzeug hält den zunächst flüssigen Werkstoff in der beabsichtigten Form, bis dieser in dem Formwerkzeug erstarrt und formstabil wird. Bei diesem Erstarrungsprozess kann ein Folienteil, das entsprechend an beziehungsweise in dem Formwerkzeug positioniert ist, sich mit dem Werkstoff fest verbinden beziehungsweise mit diesem verbacken. Die Positionierung des Folienteils kann derart vorgesehen sein, dass das Folienteil direkt an einem Kern des Formwerkzeugs positioniert wird, so dass das Folienteil nach der Entnahme des erzeugten Labelformteils auf einer "Innenseite" des Formkörpers liegt. Alternativ kann die Positionierung des Folienteils auch derart vorgesehen sein, dass das Folienteil direkt an der Matrize des Formwerkzeugs positioniert wird, so dass das Folienteil nach der Entnahme des erzeugten Labelformteils auf einer "Außenseite" des Formkörpers liegt. Die Verwendung zusätzlicher Klebemittel zur Herstellung der festen Verbindung ist nicht erforderlich.

Weiterhin kann vorgesehen sein, dass das Folienteil zumindest teilweise als ein Etikett ausgebildet ist. Durch die Ausbildung von zumindest einem Teil des Folienteils als Etikett wird eine zusätzliche Funktionalität ergänzt. Es kann auf eine nachträgliche separate Etikettierung des Labelformteils verzichtet werden. Das Etikett kann sowohl zur optischen Informationsvermittlung dienen als auch eine dekorative Funktion wahrnehmen. Das Etikett kann, insbesondere wenn das Folienteil transparent ist und somit ein "Sichtfenster" ausbildet, beispielsweise eine Information über eine Menge des enthaltenen Gutes vermitteln, also eine Füllstandsanzeige sein. Beispielsweise in Form einer auf das Folienteil aufgedruckten Skala zur Volumen- und/oder Gewichtsablesung. Ein solches Sichtfenster lässt ferner auch einen Rückschluss auf eine eventuelle Verderbnis eines in dem Labelformteil versiegelt verpackten Lebensmittels zu, ohne dass das Labelformteil an der Befüllöffnung geöffnet werden müsste. Denkbar ist ebenfalls eine Datumsangabe auf dem Folienteil vorzusehen, insbesondere wenn ein verderbliches Gut zeitnah in dem Labelformteil verpackt wird. Diese kann dann eine Information über den Befüllungszeitpunkt und/oder ein Mindesthaltbarkeitsdatum umfassen. Eine Preis- und/oder Inhaltsabgabe für das verpackte Gut ist ebenfalls möglich. Ebenso ist das Vorsehen eines Barcodes und/oder eines QR-Codes für eine erweiterte maschinell auslesbare Informationsvermittlung möglich. Das Folienteil kann ganz oder teilweise aus einem Kunststoff hergestellt sein, beispielsweise aus der Familie der Polyester, insbesondere aus der Familie der Thermoplasten, beispielsweise Polyethylen (PE), Polyethylenterephthalat (PET) oder Polystyrol (PS) oder Polypropylen (PP), wobei diese gegebenenfalls besonders behandelt sein können, um speziell gewünschte Eigenschaften aufzuweisen.

Nützlicherweise kann vorgesehen sein, dass das Folienteil eine Schrumpffolie ist. Eine Schrumpffolie zieht sich durch Erwärmen hautsächlich in der von Ihr eingenommenen Fläche zusammen. Durch die Ausbildung des Folienteils als Schrumpffolie kann dementsprechend das Folienteil nachträglich, das heißt im Anschluss nach dem festen Verbinden des Folienteils am Rahmen der fensterartigen Öffnung, durch ein Erwärmen des Folienteils gespannt werden. Es kann dabei eine unter einer Spannung stehende und somit besonders glatte Oberfläche des Folienteils in der fensterartigen Öffnung geschaffen werden. Die Oberfläche wirkt daher optisch ansprechender, ist leichter ablesbar, falls es als Etikett ausgestaltet ist, und beult sich während eines Befüllvorgangs nicht aus, so dass das Volumen des Labelformteils in offensichtlicher Weise eingehalten wird. Das Folienteil kann beispielsweise aus einem Polyolefin bestehen, das die gewünschte Schrumpfeigenschaft aufweist. Das Schrumpfen des Folienteils kann dabei bereits in dem Formwerkzeug erfolgen oder gegebenenfalls erst später. Wesentlich ist jedoch, dass die feste Verbindung zwischen dem Formkörper und dem Folienteil bereits besteht, dass das Material des Formkörpers also bereits ausreichend abgekühlt ist und die benötigte Festigkeit aufweist, um die Spannungskräfte der Schrumpffolie ohne eine unerwünschte Deformation aufzunehmen. Insbesondere wenn das Folienteil eine Schrumpffolie mit einem Aufdruck ist, kann vorzugsweise vorgesehen sein, dass die bei der Herstellung des Labelformteils vorgesehene Schrumpfung derart berücksichtigt wird, dass die Proportionen des Aufdrucks nach dem Schrumpfen korrekt sind.

Es kann vorgesehen sein, dass das Formteil und das Folienteil zumindest teilweise aus demselben Material ausgebildet sind. Die Verwendung gleicher Materialien erleichtert eine Wiederverwertung der verwendeten Materialen, nachdem das Labelformteil seinen Zweck erfüllt hat und dient somit der Verbesserung der Effizienz. Die Verwendung desselben Materials ist insbesondere auch bei Kunststoffen von Vorteil, da deren Wiederverwertung besonders problematisch sein kann. Es ist möglich, das Formteil aus einem Kunststoff auszubilden, beispielsweise Polyethylen (PE), Polyethylenterephthalat (PET) oder Polystyrol (PS) oder Polypropylen (PP), und als Folienteil eine Schrumpffolie vorzusehen, die im Wesentlichen aus demselben Kunststoff besteht, der allerdings während seiner Herstellung besonders behandelt wurde, damit die einzelnen Molekülketten eine räumlich orientierte Struktur in dem Folienteil ausbilden, um die erwünschte Schrumpfbarkeit zu erzielen.

Weiterhin kann vorgesehen sein, dass eine Flächensumme der mindestens einen fensterartigen Öffnung mindestens 20 Prozent, vorzugsweise über 40 Prozent, vorzugsweise über 60 Prozent und vorzugsweise über 80 Prozent einer Außenfläche des Formteils ausmacht. Mit größerer Flächensumme steigt dabei die eingesparte Materialmenge bei dem Formteil an.

Nützlicherweise kann vorgesehen sein, dass das Formteil und/oder das mit dem Formteil verschweißte Folienteil formstabilisierend und/oder formhaltend ausgestaltet ist. Auf diese Weise kann das Labelformteil eine Verpackung ausbilden, die auch im geöffneten Zustand mit unterschiedlichsten enthaltenen Befüllungen ihre Form beibehält und insbesondere nicht in sich zusammenfällt. Die Begriffe "formstabilisierend" und "formhaltend" sind vorliegend derart zu verstehen, dass das Formteil und/oder das Folienteil einzeln oder zusammen eine bei der Herstellung vorgegebene Form bewahren beziehungsweise anstreben, sofern sie nicht durch einwirkende Kräfte zeitweilig verformt werden, beispielsweise beim Zusammendrücken eines als Tube ausgebildeten Labelformteils. Als Verschweißen kann vorliegend insbesondere ein thermisches Verschmelzen verstanden werden, bei dem zumindest eine der sich verbindenden Komponenten zunächst flüssig ist und beim sich Abkühlen erstarrt. Zusätzliche Klebekomponenten sind nicht unbedingt erforderlich.

Beschrieben wird ferner die Verwendung des vorstehend beschriebenen Labelformteils als ein Behälter, wobei der Behälter eingerichtet ist zur Aufnahme von flüssigen und/oder festen Produkten, insbesondere Lebensmittelprodukten, Pharmaprodukten, Computerkomponenten, Telekommunikationskomponenten, Automobilbauteilen und/oder Körperpflegeprodukten.

Ferner wird die Verwendung des vorstehend beschriebenen Labelformteils als ein Deckel eines Behälters, wobei der Behälter eingerichtet ist zur Aufnahme von flüssigen und/oder festen Produkten, insbesondere Lebensmittelprodukten, Pharmaprodukten, Computerkomponenten, Telekommunikationskomponenten, Automobilbauteilen und/oder Körperpflegeprodukten, und wobei der Deckel als Einwegdeckel oder als Mehrwegdeckel ausgeführt ist, beschrieben.

Darüber hinaus wird auch ein Verfahren zur Herstellung des vorstehend beschriebenen Labelformteils umfassend die folgenden Schritte beschrieben:
Herstellen eines Folienteils;
Einbringen des Folienteils in ein Formwerkzeug;
Eintragen eines erhitzten formbaren Materials in das Formwerkzeug;
Formen des Formteils in dem Formwerkzeug bei gleichzeitigem Verschmelzen des Formteils mit dem Folienteil, um das Labelformteil auszubilden;
Abkühlen des Labelformteils; und
Entnehmen des Labelformteils aus dem Formwerkzeug.

Auf diese Weise werden die erfindungsgemäßen Vorteile auch im Rahmen eines Verfahrens realisiert, wobei sich vorteilhafte Ausgestaltungen des Verfahrens wieder aus den abhängigen Ansprüchen ergeben.

Nützlicherweise kann vorgesehen sein, dass das Herstellen des Folienteils ein Bedrucken des Folienteils beinhaltet. Das Bedrucken des Folienteils kann dabei insbesondere unabhängig vom Formteil und vor dem Verschmelzen mit dem Formteil erfolgen. Das Bedrucken kann somit außerhalb des Formwerkzeugs erfolgen. Durch das Bedrucken kann das Folienteil in vorteilhafter Weise als dekoratives Element und/oder informativer Bestandteil des als Verpackung verwendbaren Labelformteils dienen. Ein zusätzliches Etikettieren des Labelformteils nach der Entnahme aus dem Formwerkzeug kann entfallen. Gegebenenfalls kann vorgesehen sein, dass das Bedrucken auch erst nach oder bei dem Einbringen des Folienteils in das Formwerkzeug erfolgt.

Ferner kann vorgesehen sein, dass das Formen des Formteils bei gleichzeitigem Verschmelzen des Formteils mit dem Folienteil ein Schrumpfen und Spannen des Folienteils an einer von dem Folienteil überdeckten fensterartigen Öffnung des Formteils beinhaltet. Um das Schrumpfen und Spannen des Folienteils zu erreichen, ist eine gesonderte Zufuhr von thermischer Energie über eine hierfür gegebenenfalls vorgesehene Heiz- beziehungsweise Wärmequelle zu dem Folienteil erforderlich. Die beim Formen des Formteils bereits aus dem erhitzten Material auf das Folienteil überströmende thermische Energie ist üblicherweise nicht ausreichend. Das Schrumpfen und Spannen des Folienteils kann daher beispielsweise mittels einer gesonderten Wärmequelle an oder in der Nähe des Formwerkzeugs bewirkt werden.

Alternativ ist jedoch auch möglich, dass nach dem Entnehmen des Labelformteils aus dem Formwerkzeug das Labelformteil erwärmt wird, so dass ein Schrumpfen und Spannen des Folienteils an einer von dem Folienteil überdeckten fensterartigen Öffnung des Formteils bewirkt wird. Das Erwärmen erfolgt dann getrennt von dem Formwerkzeug, beispielsweise in einer kurzen Heizstraße, in der die kurze Erwärmung des Labelformteils bewirkt wird. Dabei ist zu beachten, dass sich das Folienteil aufgrund seiner gegenüber dem Formteil kleineren Masse schneller erwärmt, so dass auch bei im Wesentlichen identischen Schmelzpunkten von Form- und Folienteil das Folienteil geschrumpft werden kann, ohne dass das Formteil angeschmolzen wird oder die feste Verbindung zwischen Form- und Folienteil leidet.

Die vorstehend beschriebene Erfindung wird nun im Folgenden unter Bezug auf die Zeichnungen beispielhaft erläutert.

Es zeigen:
- Figur 1: eine Draufsicht auf ein Formteil;
- Figur 2: eine seitliche Ansicht eines Formteils;
- Figur 3: eine isometrische Ansicht eines Formteils;
- Figur 4: eine isometrische Ansicht eines Formteils;
- Figur 5: eine seitliche Ansicht eines Formteils;
- Figur 6: eine Draufsicht auf ein Formteil;
- Figur 7: eine isometrische Ansicht eines Formteils;
- Figur 8: eine isometrische Ansicht eines Labelformteils;
- Figur 9: eine weitere isometrische Ansicht eines alternativ ausgestalteten Formteils; und
- Figur 10: ein Flussdiagramm eines Verfahrens zur Herstellung eines Labelformteils.

In den folgenden Zeichnungen bezeichnen gleiche Bezugszeichen gleiche oder gleichartige Teile.

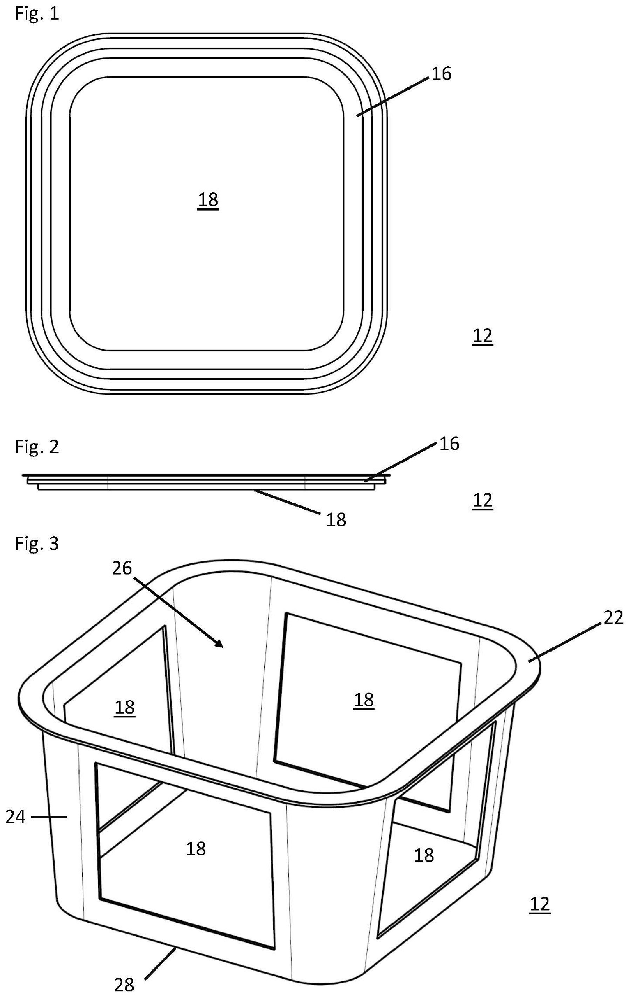

Figur 1 zeigt eine Draufsicht auf ein Formteil 12. Das in Figur 1 in der Draufsicht dargestellte Formteil 10 lässt insbesondere eine fensterartige Öffnung 18 erkennen, welche umlaufend von einem Fensterrahmen 16 begrenzt ist. Der Fensterrahmen 16 ist insbesondere das schmale, die fensterartige Öffnung 18 direkt umgebende Material, aus welchem das Formteil 12 selbst ausgebildet ist.

Figur 2 zeigt eine seitliche Ansicht des in Figur 1 dargestellten Formteils 12. In Zusammenschau von Figur 1 und Figur 2 wird deutlich, dass es sich bei dem dargestellten Formteil 12 um einen Deckel handelt, wobei dieses Formteil 12 zur Abdeckung einer Öffnung eines Behälters vorgesehen sein kann, wobei es sich bei dieser Öffnung des Behälters inbesondere um ein mittels des als Deckel ausgebildeten Formteils 12 (wieder-)verschließbare Befüllöffnung handeln kann. An dieser Befüllöffnung kann dann je nach Bedarf zusätzlich nach einem anfänglichen Befüllen mit dem zu verpackenden Gut auch eine Versiegelung in einer dem Fachmann bekannten Weise vorgesehen sein, die unabhängig von dem Deckel vorgesehen ist.

Figur 3 zeigt eine isometrische Ansicht eines Formteils 12. Das in Figur 3 isometrisch dargestellte Formteil 12 ist im Wesentlichen in Form eines Rahmens 24 ausgebildet, welcher auf einem Boden 28 des Formteils 12 aufgesetzt ist. Der Boden 28 kann dabei insbesondere durchgehend ausgebildet sein. Der Rahmen 24 wiederum bildet gemeinsam mit dem Boden 28 des Formteils 12 eine Mehrzahl von fensterartigen Öffnungen 18 aus, welche bei der in Figur 3 gewählten rechteckigen Bodenform mit abgerundeten Ecken zu vier voneinander getrennten fensterartigen Öffnungen 18 an den vier verschiedenen Seitenflächen des Formteils 12 führt. Einzelne Seitenflächen könnten gegebenenfalls auch ohne oder mit einer kleineren fensterartige Öffnung 18 ausgestaltet werden. Zusätzliche Stege, die die fensterartigen Öffnungen an den einzelnen Seitenflächen weiter unterteilen könnten vorgesehen werden. Auf der Oberseite des Formteils 12, welche auf der dem Boden gegenüberliegenden Seite des Formteils 12 liegt, ist ein Kragen 22 gekennzeichnet, welcher eine nicht näher bezeichnete "Befüllöffnung" des Formteils 12 definiert. Die nicht näher bezeichnete Befüllöffnung des Formteils 12 ist insbesondere dadurch gekennzeichnet, dass sie nicht dafür vorgesehen ist, durch ein Folienteil, wie es im Folgenden noch beschrieben wird, abgedeckt zu werden, wenn das Formteil 12 zu einem Labelformteil weitergebildet wird. Das in Figur 3 dargestellte Formteil 12 umfasst in einer üblichen Weise ein Innenvolumen 26, welches durch den Rahmen 24 nach außen begrenzt ist, wobei sämtliche Öffnungen des Formteils 12, das heißt die Mehrzahl von fensterartigen Öffnungen 18 sowie die nicht näher bezeichnete Befüllöffnung zur Bestimmung des Innenvolumens 26 gemeinsam als geschlossene Außenfläche des Formteils 12 angenommen wird. Das in Figur 3 dargestellte Formteil 12 kann beispielsweise eine Befüllöffnung aufweisen, die mittels des in den Figuren 1 und 2 dargestellten Formteils 12 (wieder-)verschließbar ist.

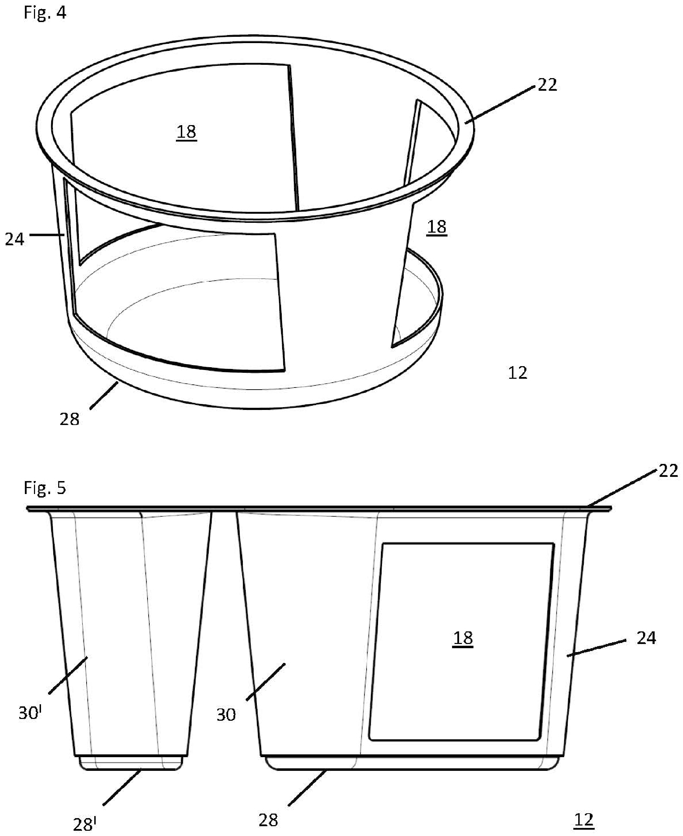

Figur 4 zeigt eine weitere isometrische Ansicht eines Formteils 12. Das in Figur 4 dargestellte Formteil 12 umfasst einen alternativ ausgebildeten Boden 28, welcher eine runde Form aufweist, so dass das Formteil 12 wegen der leicht geneigten Seitenwände in seiner äußeren Erscheinung im Wesentlichen kegelstumpfförmig erscheint. An einer Außenfläche des Formteils 12 sind zwischen Stegen des Rahmens 24 in Figur 4 insgesamt 3 voneinander getrennte fensterartige Öffnungen 18 sichtbar, welche umlaufend an der Mantelfläche des im Wesentlichen kegelstumpfförmig ausgebildeten Formteils 12 im Wesentlichen gleichmäßig angeordnet sind. Eine ungleichmäßige Anordnung ist möglich.

Figur 5 zeigt eine weitere seitliche Ansicht eines Formteils 12. Das in Figur 5 dargestellte Formteil 12 umfasst zwei voneinander getrennte Volumina. Diese beiden Innenvolumina sind jeweils ausgehend von dem Boden 28 und einem weiteren Boden 28' und einer Wand 30, in welcher die fensterartige Öffnung 18 erkennbar ist beziehungsweise einer weiteren Wand 30' begrenzt, wobei die Wand 30 und die weitere Wand 30' auf der den Böden 28, 28' abgewandten oberen Endflächen, in welchen sich in Figur 5 jeweils nicht sichtbare Befüllöffnungen befinden, mittels des Kragens 22 zusammengefasst. Figur 5 dient im Wesentlichen zur Veranschaulichung eines komplex ausgebildeten Formteils, welches nur in Teilen mittels der fensterartigen Öffnungen 18 ausgebildet ist beziehungsweise mit diesen ausgestattet ist.

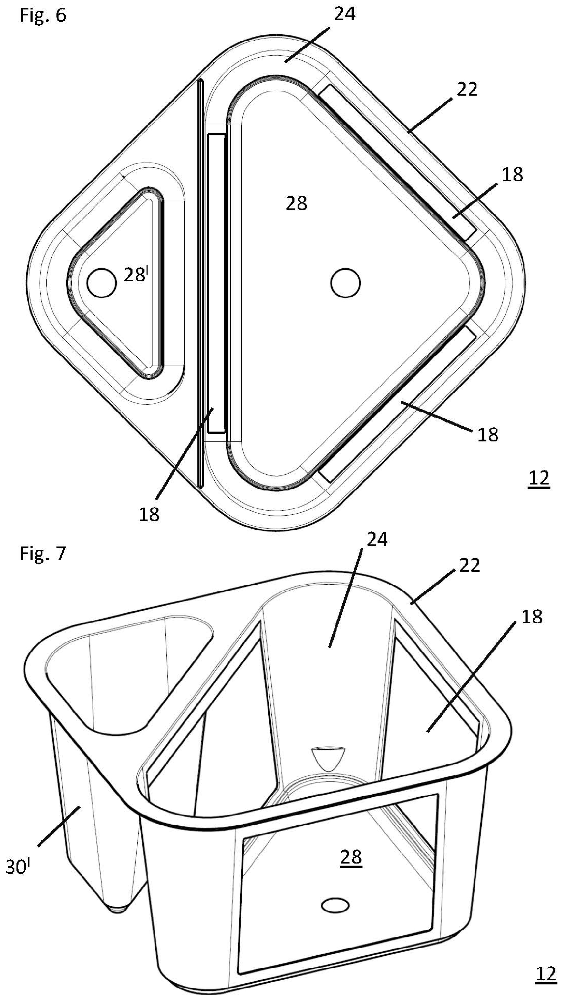

Figur 6 zeigt eine Draufsicht auf das in Figur 5 dargestellte Formteil 12. Erkennbar sind in Figur 6 durch die nicht näher gekennzeichneten jeweiligen "Befüllöffnungen" der Boden 28 und der weitere Boden 28' von den zwei voneinander getrennten Innenvolumina, wobei die beiden Böden 28, 28' jeweils dreieckig mit abgerundeten Ecken ausgebildet sind und an dem Boden 28 der Rahmen 24 ansetzt, welcher ausgehend von dem Boden 28 drei voneinander getrennte fensterartige Öffnungen 18 ausbildet und auf der Oberseite des Formteils 12 in dem Kragen 22 endet, welcher die beiden Teile des Formteils 12 zusammenfasst.

Figur 7 zeigt eine isometrische Ansicht des Formteils 12 aus den Figuren 5 und 6. Erkennbar in Figur 7 ist insbesondere die Größe der durch die fensterartigen Öffnungen eingenommenen Oberfläche der fensterartigen Öffnungen 18 an der Außenoberfläche des Formteils 12 sowie die gezielte Anordnung des Rahmens 24 an den Kantenbereichen des im Wesentlichen als Dreiecksfläche ausgebildeten Bodens 28, wodurch eine ausreichende Eigenstabilität des Formteils 12 trotz der reduzierten Wandfläche erreicht wird.

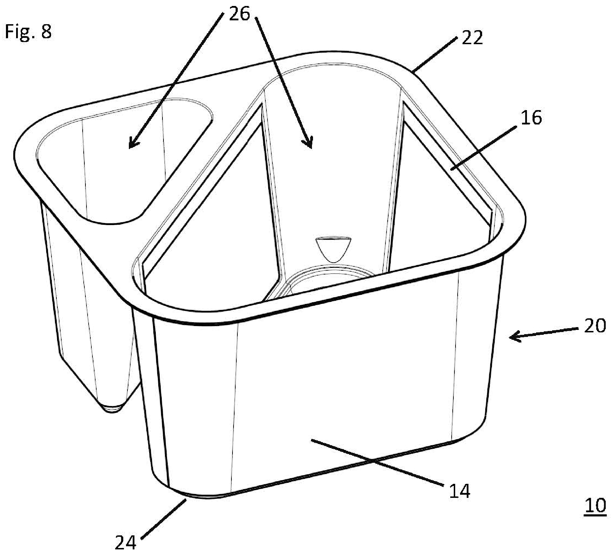

Figur 8 zeigt eine isometrische Ansicht eines Labelformteils 10, welches mit Hilfe des aus den Figuren 5 bis 7 bekannten Formteils 12 hergestellt/weitergebildet wurde. Das Labelformteil 10 umfasst insbesondere eine Außenfläche 20, die durch den Rahmen 24 sowie die in die fensterartigen Öffnungen 18 eingesetzten Folienteile 14 definiert wird. Die Folienteile 14 sind dabei an ihren jeweiligen Positionen, in denen sie die fensterartigen Öffnungen 18 abdecken umlaufend an dem Fensterrahmen 16 fest verbunden.

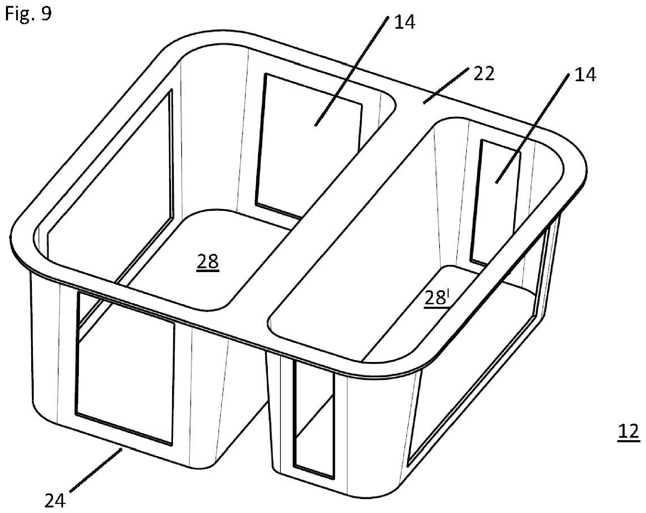

Figur 9 zeigt eine weitere isometrische Ansicht eines weiteren Formteils 12 in einer alternativen Ausgestaltung. Bei dem in Figur 9 dargestellten Formteil 12 sind wieder, wie bei dem bereits aus Figur 8 bekannten Labelformteil 10 zwei voneinander getrennte Innenvolumen vorgesehen. Im Gegensatz zu dem aus Figur 8 bekannten Labelformteil 10 ist bei dem in Figur 9 dargestellten Formteil 12 jedoch der Rahmen 24 derart ausgestaltet, dass er sowohl den Teil des Innenvolumens oberhalb des Bodens 28 als auch den weiteren Teil des Innenvolumens oberhalb des weiteren Bodens 28' ausbildet. Auf diese Weise ist die Menge an Material, die zur Herstellung des Formteils 12 benötigt wird durch die stark reduzierte Wandfläche minimiert. Ferner entstehen zwei voneinander getrennte Innenvolumina die jeweils eigene fensterartige Öffnungen 18 aufweisen.

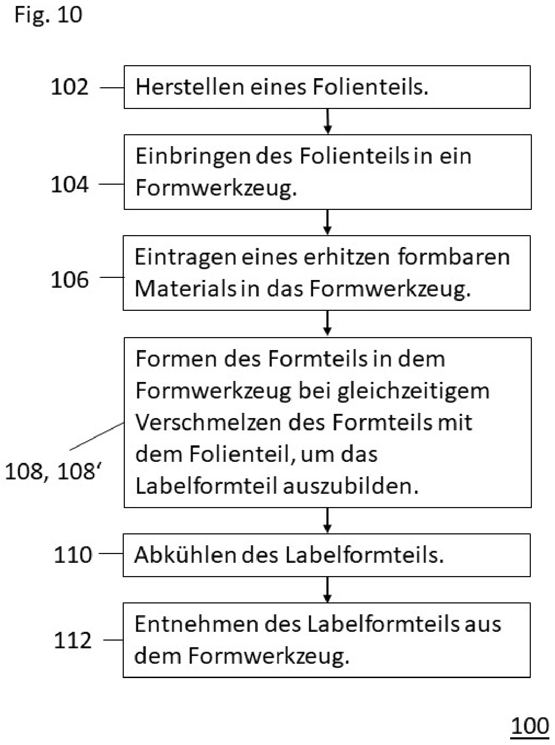

Figur 10 zeigt ein Flussdiagramm eines Verfahrens zur Herstellung eines Labelformteils 10, wie es insbesondere in den Figuren 8 oder 9 dargestellt ist. Das Verfahren 100 beginnt mit einem Herstellen 102 eines Folienteils 14. Das Folienteil kann beispielsweise ein Kunststoff sein, insbesondere aus der Familie der Thermoplasten, beispielsweise Polyethylen (PE), Polyethylenterephthalat (PET) oder Polystyrol (PS) oder Polypropylen (PP). Andere dem Fachmann bekannte und in ihren Materialeigenschaften ähnliche und damit geeignete Werkstoffe können zur Verwendung ebenfalls herangezogen werden. Das Herstellen des Folienteils 14 kann dabei ein Bedrucken des Folienteils 14 beinhalten. Das Verfahren wird anschließend mit einem Einbringen 104 des Folienteils 14 in ein hierfür eingerichtetes Formwerkzeug fortgesetzt. Das Einbringen 104 des Folienteils 14 kann derart vorgesehen sein, dass das Folienteil 14 direkt an einem Kern des Formwerkzeugs positioniert wird, so dass das Folienteil 14 später nach der Entnahme des zu erzeugenden Labelformteils 10 auf einer "Innenseite" des Formkörpers 12 liegt. Alternativ kann die Positionierung des Folienteils 14 auch derart vorgesehen sein, dass das Folienteil 14 direkt an der Matrize des Formwerkzeugs positioniert wird, so dass das Folienteil 14 nach der Entnahme des zu erzeugenden Labelformteils 10 auf einer "Außenseite" des Formkörpers 12 liegt. Das Formwerkzeug kann gegebenenfalls gekühlt, insbesondere wassergekühlt, und mehrteilig sein. Das eingebrachte Folienteil 14 wird dabei innerhalb des Formwerkzeugs positioniert und an der hierfür vorgesehenen Stelle gehalten. Dies kann beispielsweise mechanisch, beispielsweise mittels eines Vakuums, oder mittels Druckluft, oder mit Hilfe einer elektrostatischen Aufladung erfolgen. Das Verfahren 100 wird im Anschluss daran durch ein Einbringen 106 eines erhitzten formbaren Materials in das Formwerkzeug fortgesetzt. Das Material kann insbesondere flüssig eingebracht werden und beispielsweise ein Kunststoff sein, insbesondere aus der Familie der Thermoplasten, beispielsweise Polyethylen (PE), Polyethylenterephthalat (PET) oder Polystyrol (PS) oder Polypropylen (PP). Andere dem Fachmann bekannte und in ihren Materialeigenschaften ähnliche und daher geeignete Werkstoffe können zur Verwendung ebenfalls herangezogen werden. Im Anschluss daran erfolgt ein Formen 108 des Formteils 12 mit dem Formwerkzeug bei gleichzeitigem Verschmelzen 108' des Formteils 12 mit dem Folienteil 14, um das Labelformteil 10 auszubilden. Das Formen 108 des Formteils 12 bei gleichzeitigem Verschmelzen 108' des Formteils 12 mit dem Folienteil 14 kann dabei ein Schrumpfen und Spannen des Folienteils 14 an einer von dem Folienteil 14 überdeckten fensterartigen Öffnung 18 des Formteils 12 beinhalten. Das Schrumpfen und Spannen des Folienteils 14 kann dabei insbesondere durch ein partielles Aufheizen beziehungsweise Erwärmen des Bereichs der fensterartigen Öffnung 18 umfassen. Das Formen 108 des Formteils 12 mit dem Formwerkzeug kann dabei insbesondere derart ausgeführt werden, dass in den Bereichen, in welchen das Formteil 12 die fensterartigen Öffnungen 18 aufweisen soll, das erhitzte formbare Material während des Formungsvorgangs durch das Formwerkzeug vollständig verdrängt wird beziehungsweise bereits beim Eindringen in das Formwerkzeug von den fensterartigen Öffnungen 18 ferngehalten wird. Das Formwerkzeug ist dementsprechend derart ausgebildet, dass im Bereich der fensterartigen Öffnungen nach dem Abkühlen des Labelformteils 10 kein Teil des thermisch erhitzten formbaren Materials vorliegt, welches zur Herstellung des Formteils 12 dient. Das Formen des Labelformteils 12 beinhaltet konsequenterweise bei flüssig eingebrachtem Material in das Formwerkzeug ein Erhärten des Materials in dem insbesondere gekühlten Formwerkzeug.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Labelformteil
- 12: Formteil
- 14: Folienteil
- 16: Fensterrahmen
- 18: fensterartige Öffnung
- 20: Außenfläche
- 22: Kragen
- 24: Rahmen
- 26: Innenvolumen
- 28: Boden
- 28': weiterer Boden
- 30: Wand
- 30': weitere Wand

- 100: Verfahren
- 102: Herstellen
- 104: Einbringen
- 106: Eintragen
- 108: Formen
- 108': Verschmelzen
- 110: Abkühlen
- 112: Entnehmen

## Patentansprüche

1. Labelformteil (10) umfassend ein Formteil (12) und ein mit dem Formteil (12) thermisch verschmolzenes Folienteil (14), **dadurch gekennzeichnet, dass** das Formteil (12) mindestens eine von einem Fensterrahmen (16) umlaufend begrenzte fensterartige Öffnung (18) umfasst, wobei das Folienteil (14) die fensterartige Öffnung (18) abdeckt und umlaufend um den Fensterrahmen (16) fest mit dem Fensterrahmen (16) verbunden ist.

2. Labelformteil (10) nach Anspruch 1, **dadurch gekennzeichnet, dass** das Formteil (12) zumindest teilweise einen skelettartigen Körper aufweist.

3. Labelformteil (10) nach Anspruch 1 oder 2, **dadurch gekennzeichnet, dass** das Formteil (12) zumindest teilweise eine behälter- oder deckelartige Form aufweist.

4. Labelformteil (10) nach einem der vorhergehenden Ansprüche, **dadurch gekennzeichnet, dass** das Formteil (12) zumindest teilweise aus einem Kunststoff ausgebildet ist.

5. Labelformteil (10) nach einem der vorhergehenden Ansprüche, **dadurch gekennzeichnet, dass** das Formteil (12) zumindest teilweise als ein Spritzgussteil ausgebildet ist.

6. Labelformteil (10) nach einem der vorhergehenden Ansprüche, **dadurch gekennzeichnet, dass** das Folienteil (14) zumindest teilweise als ein Etikett ausgebildet ist.

7. Labelformteil (10) nach einem der vorhergehenden Ansprüche, **dadurch gekennzeichnet, dass** das Folienteil (14) eine Schrumpffolie ist.

8. Labelformteil (10) nach einem der vorhergehenden Ansprüche, **dadurch gekennzeichnet, dass** das Formteil (12) und das Folienteil (14) zumindest teilweise aus demselben Material ausgebildet sind.

9. Labelformteil (10) nach einem der vorhergehenden Ansprüche, **dadurch gekennzeichnet, dass** eine Flächensumme der mindestens einen fensterartigen Öffnung (18) mindestens 20 Prozent, vorzugsweise über 40 Prozent, vorzugsweise über 60 Prozent und vorzugsweise über 80 Prozent einer Außenfläche (20) des Formteils (12) ausmacht.

10. Labelformteil (10) nach einem der Ansprüche 1 bis 9, **dadurch gekennzeichnet, dass** das Formteil (12) und/oder das mit dem Formteil (12) verschweißte Folienteil (14) formstabilisierend und/oder formhaltend ausgestaltet ist.

11. Verwendung eines Labelformteils (10) nach einem der Ansprüche 1 bis 10 als ein Behälter, wobei der Behälter eingerichtet ist zur Aufnahme von flüssigen und/oder festen Produkten, insbesondere Lebensmittelprodukten, Pharmaprodukten, Computerkomponenten, Telekommunikationskomponenten, Automobilbauteilen und/oder Körperpflegeprodukten.

12. Verwendung eines Labelformteils (10) nach einem der Ansprüche 1 bis 10 als ein Deckel eines Behälters, wobei der Behälter eingerichtet ist zur Aufnahme von flüssigen und/oder festen Produkten, insbesondere Lebensmittelprodukten, Pharmaprodukten, Computerkomponenten, Telekommunikationskomponenten, Automobilbauteilen und/oder Körperpflegeprodukten, und wobei der Deckel als Einwegdeckel oder als Mehrwegdeckel ausgeführt ist.

13. Verfahren (100) zur Herstellung eines Labelformteils (10) nach einem der Ansprüche 1 bis 10 umfassend die folgenden Schritte:
Herstellen (102) eines Folienteils (14);
Einbringen (104) des Folienteils (14) in ein Formwerkzeug;
Eintragen (106) eines thermisch erhitzen formbaren Materials in das Formwerkzeug;
Formen (108) des Formteils (12) in dem Formwerkzeug bei gleichzeitigem Verschmelzen (108') des Formteils (12) mit dem Folienteil (14), um das Labelformteil (10) auszubilden;
Abkühlen (110) des Labelformteils (10); und
Entnehmen (112) des Labelformteils (10) aus dem Formwerkzeug.

14. Verfahren (100) nach Anspruch 13, **dadurch gekennzeichnet, dass** das Herstellen (102) des Folienteils (14) ein Bedrucken des Folienteils (14) beinhaltet.

15. Verfahren (100) nach Anspruch 13 oder 14, **dadurch gekennzeichnet, dass** das Formen (108) des Formteils (12) bei gleichzeitigem Verschmelzen (108') des Formteils (12) mit dem Folienteil (14) ein Schrumpfen und Spannen des Folienteils (14) an einer von dem Folienteil (14) überdeckten fensterartigen Öffnung (18) des Formteils (12) beinhaltet.

16. Verfahren nach Anspruch 13 oder 14, **dadurch gekennzeichnet, dass** nach dem Entnehmen des Labelformteils (10) aus dem Formwerkzeug das Labelformteils (10) erwärmt wird, so dass ein Schrumpfen und Spannen des Folienteils (14) an einer von dem Folienteil (14) überdeckten fensterartigen Öffnung (18) des Formteils (12) bewirkt wird.
